# EUROPEAN PATENT SPECIFICATION

(11) **EP 2 573 474 B1**
(45) Date of publication and mention of the grant of the patent: **15.05.2019**
(21) Application number: 11182345.6
(22) Date of filing: 22.09.2011
(51) Int. Cl.: F24D 19/10, G05B 13/02, G06Q 50/06, H02J 3/38

(54) **Heat management algorithm for optimized CHP operation**
Wärmeverwaltungsalgorithmus für optimierten BHKW-Betrieb
Algorithme de gestion de la chaleur pour une opération CHP optimisée

(43) Date of publication of application: 27.03.2013
(73) Proprietor: Panasonic Intellectual Property Management Co., Ltd., Osaka-shi, Osaka 540-6207 (JP)
(72) Inventor: Neubert, Marc, 63225 Langen (DE); James, Paul, 63225 Langen (DE); Feier-Iova, Simona, 63225 Langen (DE); Becker, Ralf, 63225 Langen (DE)
(74) Representative: Grünecker Patent- und Rechtsanwälte PartG mbB

(56) References cited:
- WO-A1-03/084022
- WO-A2-2006/096854
- WO-A2-2007/065135
- WO-A2-2007/136456
- DE-A1- 10 226 755
- DE-B3-102008 063 954
- US-B2- 6 757 591

## Description

### FIELD OF THE INVENTION

The present invention relates to an optimized heat management system for different building types where combined heat and power plants (CHP) are installed. Further, the invention relates to a method for operating such combined heat and power plants in a particularly cost and energy efficient way.

### TECHNICAL BACKGROUND

Conventional power generation is typically based on a process in which fuel is burned as a source of energy to turn a turbine. For example, in the case of a base load power plant, coal is burned to obtain heat, the heat is converted to steam, and steam pressure is used to turn one or more turbines. The turbines in turn generate electrical power. However, conventional power generation is an inherently inefficient process, with much of the total energy value of the fuel source being lost in the form of wasted heat. Typically, only a small fraction of the total energy value of the fuel is extracted from the fuel and ultimately useable as electrical power.

Consequently, cogeneration processes have been developed in order to increase the overall efficiency of the power generation process. In contrast to conventional power generation, cogeneration makes use of at least some of the waste heat, usually by extracting a portion of the waste heat from the low-temperature steam exhausted from the turbines. The recovered heat may be used directly in the form of a hot air stream. Alternatively, the recovered heat may be used to create additional steam, which is then used to generate still more electrical power. However, not only steam, but also hot water resulting for instance from cooling processes during power generation can be utilized e. g. for heating purposes.

DE 102 26 755 A1 relates to a method of using a heat and power plant as an emergency back-up generator. In order to keep costs as low as possible, the emergency back-up CHP according to this document is not only operated in cases of emergency, but also for generating electric energy for autoproduction in order to reduce the amount of energy taken in from the grid.

WO 2007/065135 A2 relates to an agent based auction system and method for allocating distributed energy resources. In particular, this document deals with a power grid infrastructure for energy as well as with methods for efficiently distributing the energy within the infrastructure that rely on a decentralized approach and use intelligent agents to facilitate the communication between different levels of the infrastructure, as well as the distribution of the energy across the actual electrical couplings within the infrastructure. The energy is generated by means of distributed energy resources which are connected to each other via an electric grid. Particularly, the document deals with the hierarchy within this grid. Furthermore, auction processes are disclosed which are performed for distributing the energy from the plurality of energy generating units to the loads.

WO 03/084022 A1 discloses a system and method to manage the delivery of energy from a distribution network to one or more sites. The site represents a load which consumes energy in a controllable way. This document shows that a deadband is correlated with the set point and it is in particular disclosed that the operation of the heating system can be reduced during periods of high energy prices.

WO 2006/096854 A2 relates to systems and methods for modifying power usage wherein the energy management utilizes wireless wide area network broadcast signals and a decentralized receiver architecture to allow customers to make informed choices with regard to energy consumption and load shedding for particular appliances. A receiver assembly embedded within the household appliance receives a broadcast signal including tariff data and other electrical grid data. A processor coupled with the electrical controls the appliance in accordance with the received data and in accordance with user defined preferences.

DE 10 2008 063954 B3 relates to a decentralized energy supply system and a belonging controlling method. In particular, this system is supposed to be used in a hybrid vehicle. This document also considers combined heat and power plants and suggest to perform a control thereof which takes into account, in particular, ecological aspects, and here especially the CO₂ emissions.

WO 2007/136456 A2 discloses a further method and apparatus for controlling power consumption. For controlling the energy consumption at a facility or a group of facilities, the current and future energy prices, as well as seasonal and environmental information are taken into account to control a load shedding scheme. On-site generators can be started and placed on line to lower the facilities power consumption and the amount of load which has to be reduced may diminish accordingly. In particular, this document proposes to use two different heating systems such as a CHP and an electric heater, and discloses to use one of the at least two different heat generation mechanisms according to whether it is more advantageous to receive the energy from the grid or whether generation of electricity by means of the CHP is preferable.

US 6 757 591 B2 relates to an energy management system and method which manages the generation and distribution of energy from an energy source to a building. The building has a desired building environment and a total energy profile including a thermal energy requirement and an electrical energy requirement. The energy management system comprises an energy generator arranged to convert energy from the energy source to thermal energy and electrical energy, a heat recovery unit arranged to recover byproduct heat from the energy, a cooling unit arranged to use a first portion of the thermal energy to drive a refrigerating unit, a heating unit arranged to use a second portion of the thermal energy to drive a heating unit. Furthermore, a heat storage unit is provided to store excess heat and a controller performs an energy optimizing scheme.

Other processes have been developed in the continuing attempts to maximize the overall efficiency of power generation and energy extraction. For example, natural gas is favored as a fuel source because it is clean burning with low emissions. Thus, gas-fired turbines are often used to generate electricity. In some cogeneration power plants, which are also usually referred to as combined heat and power plants (CHP), these clean-burning gas-fired turbines are coupled with heat exchangers which extract heat from the stream of hot exhaust gases or from hot water. The exhaust gases are not released until a maximum amount of thermal energy has been recovered. These gas-fired power plants, which are often manufactured as independent, stand alone units, are therefore more efficient producers of electricity, hot water, or steam, and have the added benefit of producing negligible emissions.

Combined heat and power plants may also have generator units that can be based on any combustion engine, a Stirling engine, a fuel cell (FC), or other power generators which produce heat and power in a simultaneous process. In connection with decentralized energy production and heating, these CHP often have comparatively low size and capacity, thus being referred to as micro combined heat and power plants (mCHP). However, the boundary between the terms CHP and mCHP is not sharply defined and in the present application the wording "mCHP" is intended to cover both terms accordingly.

Moreover, the principles of the present invention are intended to be used in a wide variety of heating applications, starting from single households having a stand-alone mCHP over larger compounds such as block heat and power plants for a network of buildings up to an assembly of interrelated CHP.

Buildings and customers have a certain heat demand which has to be satisfied at any time. The selected type of mCHP is operated according to times when the electrical demand in the grid is high. This is called electricity driven mCHP. The time of high demand in the grid is also reflected by the price level of energy stock exchanges, such as for instance the European Energy Exchange (EEX). In the night, with low demand, the price of electricity is low (e. g. smaller than 50€/MWh), whereas in times of the day and especially in the evening, the price is increased (e. g. higher then 50-150€/MWh).

In future smart grids, the capability to contribute to the electrical grid is important and can be achieved with electricity driven mCHP which are operated according to grid requirements and have a high installed capacity. In particular, the installed capacity of electricity driven mCHP is much higher compared to heat driven mCHP. Hence, the heat production during operation of these electricity driven mCHP is higher. To achieve the highest possible efficiency, all the heat needs to be recovered.

In general, a large storage buffer (usually around 1.000 litres of water or other materials having high thermal capacity) is used with electricity driven mCHP, however, the problem arises that often there is not enough space available in the building. In the context of the present invention, the term "building" signifies any sort of premises which are to be heated and optionally be provided with electrical energy, such as office buildings, fabrication sites, but also private homes with restricted spatial capacities. The term also includes a network of interconnected buildings which are heated by one or more centrally controlled (micro) combined heat and power plant(s).

### Heat driven mCHP

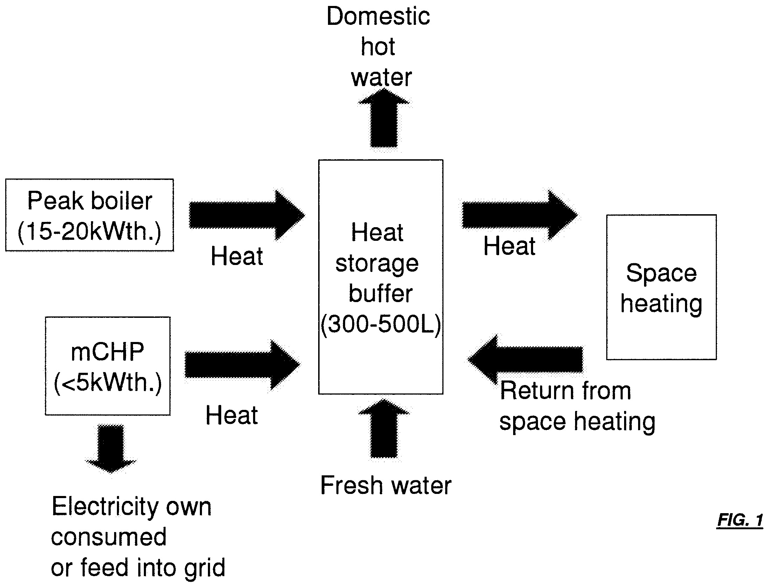

Distributed generation is a technology which has been gaining in importance in the private sector during the last decade. The main reason for this development can be seen in the incentive scheme in Germany and other European countries. Due to these programs, investment costs of the technology are decreased and mCHPs are getting attractive and an alternative power supply for residential buildings. House owners can reduce their heating and electricity bills and can achieve independency from the utility or public services. These mCHPs are mainly heat driven, which means they operate according to the building heat and domestic hot water (DHW) demand. The installed capacity has only few kW and a high amount of operation hours per year (e.g. 5.000-6.000 h/year). The mCHP is operated to serve a base load purpose. In times with low heat demand, the produced heat is stored in a thermal buffer. During winter time and for the DHW peak demand a condensing peak boiler is necessary. The typical layout of a conventional heat driven mCHP is shown in Figure 1.

The existing heat driven system, however, has several disadvantages, such as: small contribution to the public grid and thus only marginal grid improvement; considerable storage buffer losses; high fuel cost for operating the peak boiler instead of the CHP; required space for storage buffer exceeds often the available space within the building. These disadvantages are to be overcome by conventional electricity driven mCHP.

### Electricity driven mCHP with large storage buffer

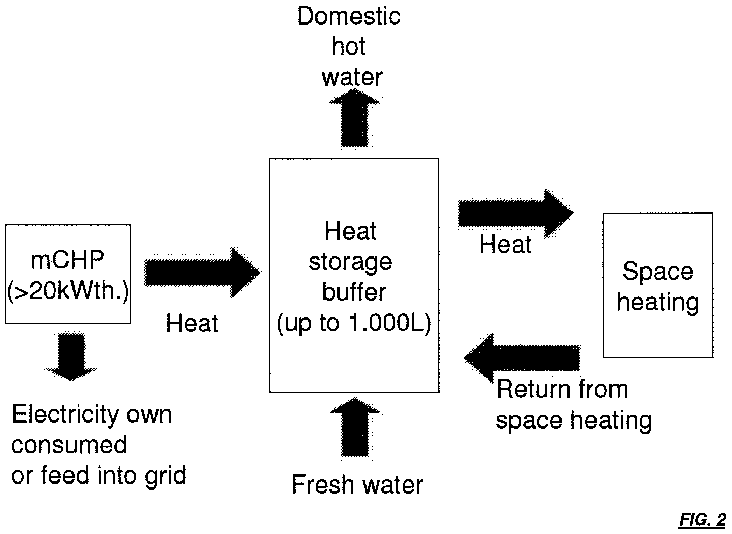

To increase the electrical contribution to the grid the installed capacity of the mCHP can be increased (e.g. mCHP>15kWel). With this change it is possible to eliminate the additional peak heater. By increasing the installed capacity of the mCHP the heat production is also increased. The increased heat production is generally recovered by an increased size of the thermal buffer tank (e.g. 1.000 litres). In Figure 2, a conventional concept of an electricity driven mCHP is shown schematically.

The main advantage of the improved system is the increased contribution to the electrical grid. Further, the peak boiler can be eliminated because of the high thermal power of the mCHP. However, this known system suffers from the disadvantage of a massively increased size of the storage buffer.

The buffer size is a limiting factor on the operation of the mCHP because if the buffer is completely charged the mCHP has to be turned off.

The target operation algorithm of the concept according to Figure 2 is to operate the mCHP during times of high demand in the grid because during that time the highest payback can be achieved. The huge storage buffer is able to recover all of the produced heat in the mCHP. The customer heat demand is satisfied and covered by the storage tank. The heating control of the building/room is always in customer responsibility.

### Electricity driven mCHP with reduced storage buffer

An additional step is to remain with the storage buffer size at about 200-500 litres. This change has an influence on the frequency and timing of operation of the mCHP. The small size of the storage buffer limits the amount of admissible produced heat, and hence the overall duration of operation. Alternatively, the surplus heat can be wasted into the environment if necessary. But then the CHP effect is lost, the efficiency is reduced and more green house gases are emitted.

The increased heat production of the mCHP is the main problem of electricity driven mCHP compared to heat driven mCHP. Heating demand is limited by building parameters and costumer comfort level.

As this is known for instance from US patent 6,757,591 B2, excess heat can be transformed into electricity or can be used for cooling purposes. There exist only few options to transform the low caloric heat back into electricity. The Organic-Rankine Cycle (ORC) is a possibility to operate at low temperatures, but the efficiency rate is lower than 10-15%. Also thermo-couples are a possible option, but the efficiency rate of this technique is even lower than for the ORC. Additional downsides are the increased investment cost, low transformation rate and increased complexity of the system which is difficult to control.

Alternatively, the surplus heat can be used in a cooling process. But the complexity of such a conventional system is very high and the efficiency rate is very low for that reason this solution is insufficient for electricity driven mCHP.

### District heating systems

The previous sections focused on the application of mCHP. Here, the control strategy is simple because the heating system is controlled by the customer or house owner. This includes constant room temperatures and no further advanced algorithm for the heating strategy.

With the concept of district heating (DH) the situation is different. The heat is generated in central power plants and distributed via insulated pipelines to the customers. In the first stage, the heat demand is controlled by the customer. From this it can be concluded that DH mainly have two peak periods per day. Early in the morning when people get up and in the evening when they get back home. The heat supply of the district heating is not designed to generate maximum peak power. The reason is that the generation costs of the last kW are very expensive. To avoid such a situation in the DH grid, a demand side management (DSM) is introduced. These DSM mechanisms are used to reduce the peak load in the heating grid.

One known idea is that the room temperature of the customer is reduced during peak time. These changes have to be very small so that the customer does not feel the changes. In a European study for district heating (S Kärkkäinen et al. RESEARCH NOTES 2247. "Demand side management of the district heating systems". ESPOO 2003. VTT RESEARCH NOTES 2247, source: http://www.vtt.fi/inf/pdf/tiedotteet/2004/T2247.pdf), different building types were analyzed. The room temperature inside the building is steady state for a long time. Then heating supply is turned off and the time constant is measured. In Figure 8 of this document, the behaviour of a building in Finland is shown.

With this type of DSM mechanism the energy consumption inside the building can be influenced and reduced and the peak power for the DH can be reduced, too.

A major difference between district heating and electricity driven mCHP is the type of application. Of course, both algorithms take into account room temperature and building structure. But the problem in the DH system is that there is not enough energy available to supply the customer with heat.

The idea of using distributed generation at residential buildings is coming up since the early 1990s. In industry and in European cities, district heating grids are used. These are mainly supplied with combined heat and power plants (CHP). This is today a known and a cost effective application. With the upcoming incentive scheme in Germany and Europe, the mCHP technology got more attractive. In the mean time more than eight different mCHP types are available on the market and a further 12 types of mCHP are in a development phase. This shows the potential of the mCHP systems in the future. Energy can be saved with a CHP process compared to separate energy supply.

With the long-time experience on mCHP, the units are designed for a base load operation with small installed capacity. For peak load, the customer has to install backup heaters. Further, a storage buffer has to be put in place because during times of small heat demand, the buffer can be used as storage and the mCHP unit has not to be turned off.

The downside of the system is its small contribution to the electrical grid. Until the year 2020, the amount on renewable energy sources will increase up to 35% from the electrical point of view. This includes that the intermittency of power generation in the system is increased and the total generation system needs more flexibility. This flexibility can be provided by a fleet of distributed generation units. When considering small scale heat driven mCHP, the necessary flexibility is not given because these units are in operation most of the time. Additionally, a large number of units need to be gathered, and furthermore the control algorithm of the thousands of units is difficult.

The above key assumptions lead to the idea of electricity driven mCHP to achieve a higher electrical contribution to the grid. The amount of mCHP units can be decreased and the control algorithm is alleviated. On the other hand, a higher installed capacity of the mCHP causes an increase in heat production which has to be recovered and utilized on the customer side.

The main problem is identified in increased heat production of electricity driven mCHP which has to be fully recovered for local use and should not be wasted with the constraint of optimal contribution to the electrical grid.

### SUMMARY OF THE INVENTION

Therefore, in view of the above disadvantages in the state of the art, the present invention provides a method according to independent claim 1 and a managing system according to independent claim 9 which are able to overcome problems that are encountered with conventional control schemes. Advantageous embodiments are defined in the dependent claims.

Constraints of the electrical grid can be reflected by the price level of the any energy stock exchange. Here it is mainly referred to the European Energy Exchange (EEX), but also NordPool can be referenced. In times of high demand in the grid, the EEX price is high and during low demand accordingly low. The operation schedule of mCHP has to be adjusted to high demand and high prices at the EEX. By defining times of high prices, the algorithm of the heat management is designed to take into account building heat demand, human comfort level, weather condition and gas price. All parameters stick together in the heat management algorithm and the optimized operation schedule of the mCHP.

As this is the case with conventional heating systems, the actual room temperature of the building is controlled stable at a certain set-point of the temperature by accordingly heating the building or allowing same to cool down. This may for instance be done by comparing a measured room temperature with the set-point temperature and operating the CHP in response to the result of this comparison. According to the present invention, this set-point temperature (which may also be called "desired temperature" or "target temperature") is not necessarily kept constant at a reference temperature value around e. g. 20°C, but is varied according to the result of an additional optimization step. By variation of the set-point temperature, the operation of the CHP is influenced.

In particular, by reducing the set-point below the reference temperature value which has for instance been chosen by a customer, the operation of the CHP is inhibited, thus allowing the building to cool down. By increasing the set-point temperature above the reference temperature value, the operation of the CHP is performed longer than it would have been allowable, if the set-point temperature coincided with the reference temperature value.

When reducing the room temperature in the night down to e. g. 18°C before the mCHP is operated the heat demand can be additionally increased. This is called pre-cooling. During operation of the mCHP the room temperature is increased and the building capacity is loaded. The operation of the mCHP can either stop if the reference temperature value of the room temperature (e. g. 20°C) is reached or, if there is still the requirement of electricity production in the grid, the set-point of the room temperature can be increased above the reference temperature value. This is called post-heating and will stop at an upper limit of e. g. about 22°C. Then the building capacity is fully loaded and can contribute to the comfort of the inhabitants during times when the mCHP is turned off.

From the adjustment of the set-point temperature value a set-point building temperature profile can be generated.

With the known concept according to S Kärkkäinen et al. RESEARCH NOTES 2247. "Demand side management of the district heating systems". ESPOO 2003. VTT RESEARCH NOTES 2247, source: http://www.vtt.fi/inf/pdf/tiedotteet/2004/T2247.pdf, ISBN 951-38-6472-3 and ISSN 1455-0865, the temperature range for DSM is about 2 Kelvin. In contrast thereto, the approach of the invention is to extend this range up to 4 Kelvin. However, the range is depending on the individual feeling of the customer. Pre-cooling and post-heating processes are extending the normal range of operation.

The mCHP heat production is too high for standard applications using conventional control schemes. For that reason, according to the present invention, the room temperature is reduced by the pre-cooling algorithm for increased heat demand. Purpose of the process of pre-cooling and post-heating is to extend the normal range of operation in standard application.

In order to solve the problem of massive heat production of electricity driven mCHP units, the invention proposes to take into account current forecasting tools on weather data, building heat demand, controller on human comfort and EEX price level. The high price level and time frame at EEX is recognized by the optimization algorithm. To match heat demand to EEX price level and time frame the building heat demand is influenced. This is done by a pre-cooling and post-heating process where the room temperature is controlled and the building inertia is taken into account as additional storage buffer. Pre-cooling process is the reduction of room temperature before the mCHP is in operation to increase the heat demand. Post-heating process is the increase of room temperature up to a certain comfort level to increase heat demand. Pre-cooling and post-heating is defined around a room set temperature and is limited by the human comfort level. The building inertia is cooled and heated up simultaneous with the room temperature and can be used as a thermal storage.

Advantage of the system operation is a maximized heat recovery to minimize heat losses of the system. The large thermal storage buffer as described above with reference to Figures 1 and 2 is minimized down to the size needed for the domestic hot water demand. The operation schedule of the mCHP is optimized to contribute to the electrical grid. Finally, the operation time is increased to reduce start/stop cycle compared to conventional electricity driven systems.

In particular, the present invention provides a method of operating a combined heat and power plant, CHP, thermally coupled with a building that is connected to an electric grid, the method comprising the steps of:
providing local input data indicative of a local heat demand of the building;
providing grid input data indicative of a grid electricity demand;
determining at least one operating time period for the CHP based on said local input data and said grid input data, calculating an expected overall heat balance from said at least one operating time period, and
calculating a set-point building temperature profile in a way that the set-point temperature value is reduced below a reference temperature value during a predefined interval anteceding at least one of said at least one operating time period.

Furthermore, during said operating time period, the set-point temperature value may be elevated above the reference temperature value by a predefined value. This post-heating step may be performed additionally to the pre-cooling step according to the present invention if necessary in order to extend the operation time of the CHP.

According to an advantageous embodiment, said local input data comprise at least one of measured temperature data of the internal temperature of the building, measured temperature data of an external temperature around the building, and weather forecast data indicating predicted temperature data of an external temperature around the building. Furthermore, data about the behavior of the residents of a building may also be taken into account. In particular, the presence or absence of the residents, their special time schedules and resulting heat and energy demand may lead to different pre-cooling and/or post-heating schemes. Also for buildings like warehouses and cold storage houses, data about the specific usage schedules may be helpful for determining the time intervals of the pre-cooling and/or post-heating steps. For instance, cooling houses may suffer from entry of undesired heat during the morning hours, when the doors are opened more often than during the evening or night times. Hence, an additional post-heating step will not be effective for these morning hours.

The grid input data may comprise at least current price data for the electricity fed into the electric grid, and, in particular, the current price data for the electricity fed into the electric grid may be based on a price level of an energy stock exchange.

Furthermore, according to an advantageous embodiment, primary energy source price data indicating a retail price of a primary energy source which is used to fuel said CHP may be provided.

In accordance with the particular type of CHP, the energy price data comprise retail price data regarding natural gas, wood pellets, or hydrogen.

According to an advantageous embodiment, in said step of determining at least one operating time period for the CHP, also an output power modulation of said CHP is calculated.

According to an advantageous embodiment, based on said primary energy source price data, a threshold value is determined, and an estimated feed-in price is compared to said threshold value, and wherein the CHP is only switched on when the estimated feed-in price exceeds the threshold value.

The problems outlined above are also solved by a system for optimizing the operation of a combined heat and power plant, CHP, thermally coupled with a building that is connected to a public electric grid, the system comprising a CHP controller for controlling at least one generator to convert energy from a primary energy source into thermal energy and electrical energy. A building heat demand forecast unit is provided for providing local input data indicative of a local heat demand of the building, and a price level calculator provides grid input data indicative of a grid electricity demand. The system comprises an optimization unit for determining at least one operating time period for the CHP based on said local input data and said grid input data, the optimization unit being operable to calculate an expected overall heat balance from said at least one operating time period, and for calculating a set-point building temperature profile in a way that the set-point temperature value is reduced below a reference temperature value during a predefined interval anteceding at least one of said operating time period.

According to an advantageous embodiment, the system may comprise a communication interface for communicating with a server network.

A comfort level controller may be provided for adjusting said reference temperature value according to a human comfort level or a desired product storage ambient temperature for one or more building units.

Furthermore, the optimization unit may further be operable to elevate the set-point temperature value above said reference temperature value by a predefined value, during said operating time period.

According to an advantageous embodiment, the system may comprise a retail price calculator for providing energy price data indicating a retail price of a primary energy source which is used to fuel said CHP.

Moreover, said optimization unit may be operable to calculate said set-point building temperature profile for a plurality of buildings or a plurality of zones of one building.

### BRIEF DESCRIPTION OF THE FIGURES

In the following the embodiments and aspects of the invention are described in more detail under reference to the attached figures. Similar or corresponding details in the figures are marked with the same reference numerals.
- **Fig. 1**: shows the typical layout of a conventional heat driven mCHP;
- **Fig. 2**: shows an exemplary architecture of a conventional electricity driven mCHP;
- **Fig. 3**: shows the system design for a building heated and powered with an electricity driven mCHP;
- **Fig. 4**: shows a schematic representation of a heat management system;
- **Fig. 5**: shows a flow diagram of a heat management algorithm according to a first embodiment;
- **Fig. 6**: shows a flow diagram of a heat management algorithm according to a second embodiment;
- **Fig. 7**: shows the correlation between electricity price level and day-time;
- **Fig. 8**: is a diagram showing the room temperature variation during the day in correlation with price level and mCHP operation cycles;
- **Fig. 9**: is a diagram showing the room temperature variation of a known mCHP system in a heat driven operation mode;
- **Fig. 10**: is a diagram showing the room temperature variation of a known mCHP system in an electricity driven operation mode.

### DETAILED DESCRIPTION OF THE INVENTION

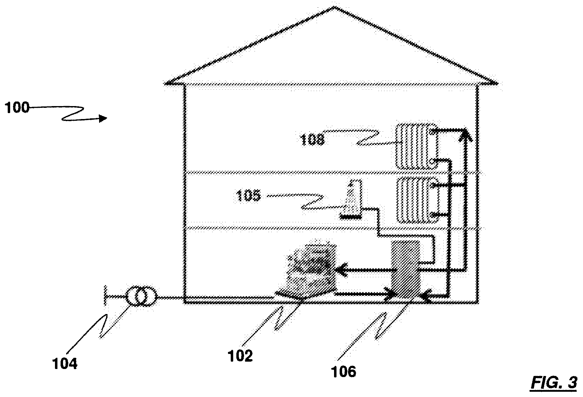

The standard design of heat driven micro combined heat and power plants (mCHP) is shown schematically in Figure 1. The system design of an electricity driven mCHP is only little different, but these differences have a major impact on the type of operation. In Figure 3, the system 100 is shown for an electricity driven mCHP.

The mCHP 102 simultaneously produces heat and electricity from a primary energy source, such as natural gas, wood pellets, fuel cells, or any other suitable primary energy source. The mCHP 102 has a connection to the public grid 104 where the electrical power will be supplied to. Power flow can be bidirectional. Island operation is not considered for this system. Otherwise there will be no contribution to the grid. However, an additional electric connection to the building's internal electric network (not shown in the drawing) is usually provided in order to directly use the electricity produced by the mCHP 102 within the building. This may be advantageous in times where the financial benefit for feeding electricity into the public grid is low.

The produced heat of the mCHP is supplied to a thermal buffer tank 106. In the present embodiment, the thermal buffer 106 is a hot water tank which is dimensioned to cover the domestic hot water (DHW) demand for one day. However, also other intermediate thermal storing materials including materials with a higher thermal capacity than water can be used.

Charging and discharging of the thermal buffer 106 is integrated in the heat management algorithm. The domestic hot water (symbolized by the shower 105) will be supplied directly from the storage buffer. With regard to the heating system two options are possible. The first option is to supply the space heating directly from the mCHP 102 (not shown in the drawing). The second option is to supply the space heating also through the storage buffer tank 106 by feeding radiators 108 with heated water, as this is shown in Fig. 3.

The main differences to a conventional heat driven mCHP system design as shown in Fig. 1 are the reduced size of the storage buffer tank 106 and the fact that an additional peak boiler can be dispensed with. The control strategy of the system is another important difference because room temperature control and building inertia are not taken into account in a heat driven mCHP system.

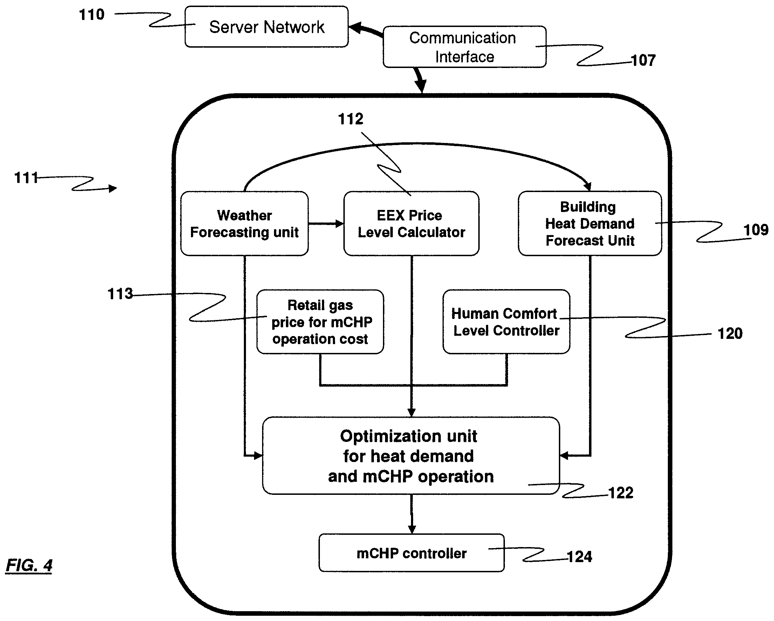

Figure 4 shows the functional components which are required to realize the heat management system 111 of an electricity driven mCHP according to the present invention.

At first a link to a server network 110 must be established via a communication interface 107. Data for weather, gas and EEX prices (or the price for any other employed primary energy source) need to be exchanged for analyzing purposes. The realization of the link is not part of the present description, but there exist already several technologies like for instance power line communication.

Weather forecast information is provided to an EEX price level calculator 112, as well to a building heat demand forecasting unit 109 which is forecasting of building heat demand, and to the optimization unit 122. Forecast of the building's heat demand is depending on building structure, location, gains and losses. The outside conditions are also taken into account. Further, human usage of the building can also be considered. This comprises the presence of persons or animals in the house in a way that if it is known beforehand that people are away from home during the pre-cooling period, the set point temperature value can be even lower. The EEX price level calculator 112 can define the time periods when the demand in the grid is high or low, respectively. This is represented by accordingly high or low prices at the EEX. Weather information has some influence on the electricity demand in the grid.

The highest demand in the public electrical grid is identified in the evenings during winter time because of the high amount of energy need for electrical lighting, cooking and heating purposes. The lowest demand in the grid is identified in summer time where lighting, cooking and heating amount is low. Maybe in the future this demand will increase in areas where cooling units can be installed for the comfort of the people.

Retail gas price is necessary for the calculation of the mCHP operation cost. It defines the threshold when it is reasonable to operate the mCHP against the EEX price. If the mCHP operation cost is higher than EEX price then the mCHP should stay off. If the mCHP operation cost is lower than EEX price the mCHP can be turned on. As already mentioned above, the reference to natural gas as the primary energy source has to be considered here only as an advantageous example because the principles of the present application are not specifically depending on the particular form of the primary energy source. An mCHP using any other suitable primary energy source, such as wood pellets or fuel cells, can of course also be operated according to the present management scheme.

A human comfort level controller 120 is established to individual define a reference temperature value which is most likely around 20°C. According to individual requirements this value can be adjusted. For human comfort, the total bandwidth around the reference temperature value is 4 Kelvin, i. e. a deviation of the set-point temperature by ±2 Kelvin around the chosen reference temperature value is acceptable.

Within an optimization unit 122 all functions and calculation are brought together. The optimization takes pre-cooling and post-heating process into account for optimal heat demand recovery in the building by matching mCHP operation to high EEX prices. The output of the optimization process is a start/stop signal to the mCHP controller 124 and/or an indication of a power level that is to be generated by the mCHP in case that a modulated output level is envisaged.

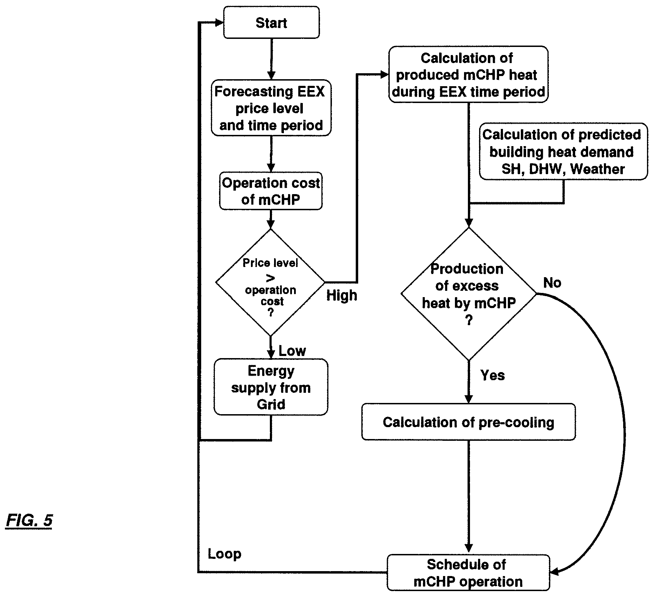

The operation of the optimized heating management system 111 according to a first embodiment of the present invention is shown in the form of a flowchart in Figure 5.

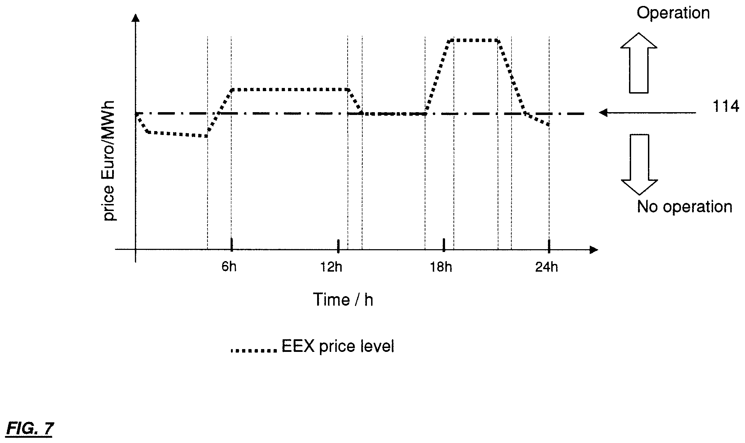

The operation is initialized and is started by calculating the EEX price level for a certain time period. Generally, a one day ahead planning is most suitable. The result of the forecast is depicted in Figure 7. It can be seen that the variation of the price level is coinciding with the demand in the grid. In the night time, when there is low electrical consumption, the price level is also low. In the morning time, around 6 o'clock, the demand rises and accordingly the price level increases. The price level is highest during evening time, in accordance with the electrical demand in the grid.

In the next step, the operation cost of the mCHP is calculated with the retail gas price. The operation cost can be transformed into a threshold value 114 that indicates whether it is economic or not to operate the mCHP. This comparison is done in the decision step which is shown in Figure 7.

If the operation of the mCHP is not useful according to the threshold value 114, energy for the building will be supplied from the grid. The algorithm loop is closed and a new calculation can be started.

In case that the price level for the feed-in has a value higher than the defined threshold 114, the mCHP could be in operation. From the defined time frame a calculation is performed to identify the heat production of the mCHP during that time.

A parallel operation is performed to predict the building's heat demand for domestic hot water and space heating in dependency of building parameters, weather conditions and the human usage of the building. Results of both calculations, heat generation of mCHP and overall heat demand of building, are compared with each other to identify excess heat generation of the mCHP. If there is no excess heat identified, the operation of the mCHP can be performed without any further changes. The operation schedule of the mCHP is according to defined EEX time period and the amount of heat production is fully utilized within the building.

However, if the result of the calculation indicates an excess heat production, according to the present invention an improvement has to be performed by taking into account a pre-cooling algorithm. This pre-cooling step implies to reduce the heat production for the building before the mCHP operation and to reduce the room temperature accordingly. With this improvement, the operation time is increased and the schedule of mCHP operation is defined. The algorithm loop is closed and the process can be started again.

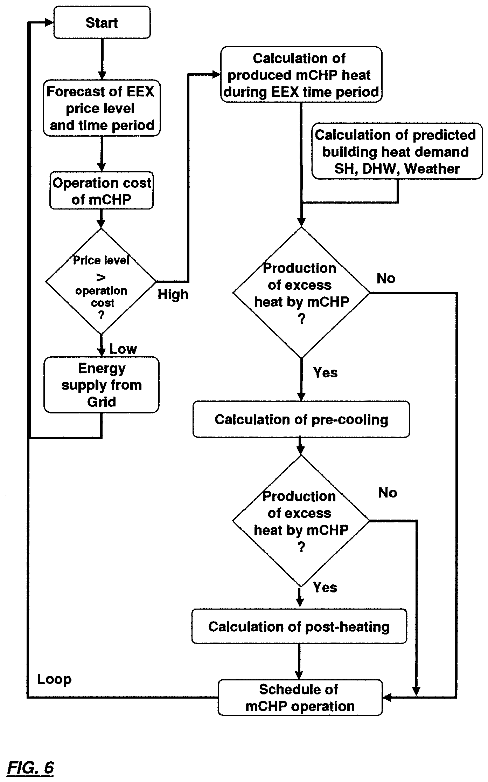

Figure 6 shows a flow chart of the method according to a second embodiment of the present invention. All steps until the pre-cooling step correspond to the process shown in Figure 5. The difference is that, if necessary, also a post-heating process can be employed, wherein the set-point of the room temperature is increased above a certain reference temperature value. This is implemented by a further decision step after the pre-cooling has been taken into consideration. In particular, it is decided whether even when using a pre-cooling the intended CHP operation will lead to the production of excess heat. If the answer is "Yes", a post-heating is scheduled, i. e. an elevated temperature set-point is allowed during the operation of the CHP.

With this improvement, the operation time of the CHP is further increased and the schedule of mCHP operation is defined. The algorithm loop is closed and the process can be started again.

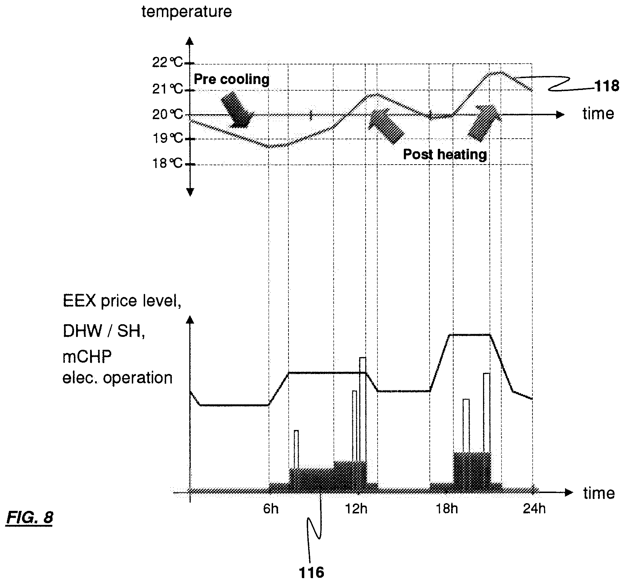

All single events of operation according to the EEX price level are given in Figure 8, which shows an example of mCHP operation according to grid demand and room temperature behavior. This example takes pre-cooling and post-heating process into account to fully utilize heat production of mCHP.

In Figure 7 the threshold value 114 is already introduced when a mCHP is able to operate. The operation of the mCHP and the heat demand of the building is added to this example and is presented in the lower part of Figure 8. It can be recognized that the mCHP operation is started at 6 o'clock until approximately 12 o'clock. During that time, the domestic hot water demand exhibits several peaks for shower and washing purposes.

The vertical bars 116 depict the operation of the mCHP, in particular the on-time and the amount of generated power. Two types of operation are possible: Firstly, the operation can be constant, and secondly a modulated operation with different levels of output power can be used. In Figure 8, the modulated operation of the mCHP is shown. During midday and afternoon the mCHP is turned off and operated again in the evening. As mentioned before, the result of the mCHP operation is excess heat production so that pre-cooling and post-heating need to be considered.

Curve 118 in Figure 8 depicts the temperature variation over time. Normally this will be an average value over all the rooms of the building. However, of course also a separate evaluation and prediction of particular zones can be envisaged.

The cycle of operation described in Figure 8 shows the improved heat management algorithm according to the present invention for electricity driven mCHP depending on the power demand in the grid.

As an initial start value, at the point of time t = 0h, the desired reference temperature value is set at about 20°C. The decreasing gradient of the room temperature is depending on building parameters and outside conditions. The room temperature drops and the building's thermal capacity is used to avoid that the room temperature drops below the human comfort level which is identified in this example as 18°C.

At 6 o'clock in the morning, the price level threshold 114 is exceeded and mCHP operation begins. The room temperature is increasing according to the heat production of the mCHP. Shortly before 12 o'clock, the reference temperature value is reached, but there is still heat production tolerable. For that reason, the room temperature is increased further, until the price drops below the threshold value. This heating step is called post-heating in the present application and is also charging the building's thermal capacity, which will be unloaded again when mCHP operation is stopped.

During afternoon time, the room temperature drops again and the mCHP is operated again at about 17 o'clock. This operation time lasts until 21 o'clock. As the room temperature has almost reached the upper limit for the set-point temperature value, post-heating can only be performed to the upper limit of 22°C. This is close to the upper border of the human comfort level. After taking the mCHP out of operation the temperature starts decreasing again.

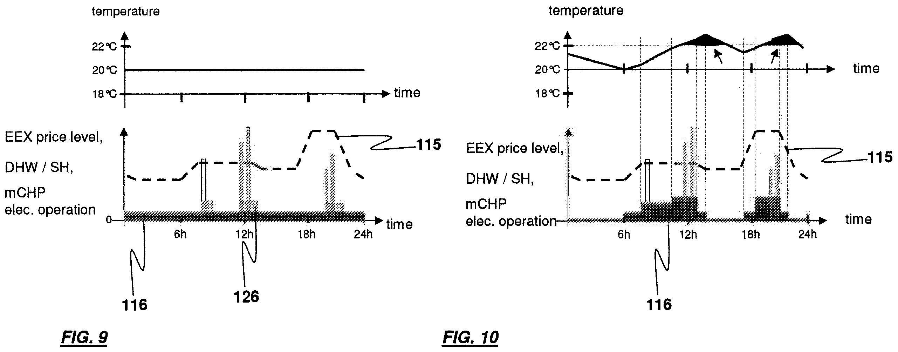

In Figures 9 and 10, for a comparison the temperature variations, domestic heat demand, EEX price level 115, and the mCHP power output are shown dependent from the day-time for conventional heat driven and electricity driven mCHP producing excess heat, respectively.

From Figure 9, the requirement of an additional peak heating 126 for complying with the peak in the DHW demand can be seen in addition to the constant base load operation of the mCHP 116. On the other hand, the system underlying Figure 10 does not need a peak heater, but uses the mCHP for covering the peak DHW demand. However, due to the relatively high building temperature anteceding the switching on of the mCHP, a considerable amount of waste heat (indicated by two arrows) is generated which has to be released into the environment and cannot be used. This significant dissipation can be avoided by the pre-cooling step according to the present invention.

In the shown embodiment, the pre-cooling step was performed by taking advantage of the passive temperature decline as determined by the building parameters and the outdoor conditions.

Furthermore, in the future, the ratio of distributed generation will increase. Already in the market are different types of mCHP units to fit the large variety of buildings which exist. This offers a high potential in aggregation of mCHP and to increase the contribution to the grid. The main problem of such a system is the diversity of building types (e. g. office, apartments etc.), mCHP units (e.g. fuel cell, stirling engine, combustion engine), and the operation schedule of the mCHP.

The invention can be used for optimized scheduling of each single building to its heat demand, as described above. In a second step the aggregator, an operator who collects the distributed power supply, can make use of such information to calculate the potential electrical contribution to the grid. Trading requirement at the EEX is defined to provide a minimum bit of 1 MW electrical power. The invention can be enlarged by developing a smart selection/combination of houses with the highest heat demand to fulfil trading requirements. In such a system the maximum heat potential will be used.

If the heating potential of the aggregated houses is low, the electrical power can be aggregated by alternating the house selection. This means in practical steps if the heat demand of one building is fully utilized the mCHP need to be turned off. Then simultaneously another unit will be turned on to take over the capacity of the other unit. Reliability of the traded electricity is increased with such kind of system operation. Redundant power generation is available for the aggregator by the knowledge of the heating status of different building. A distributed scheduling of electricity driven mCHP is achieved.

According to the present invention, the reference temperature level is mostly intended to signify a human comfort level. However, of course also any other needed temperature level, such as the much lower temperature level of cold storage houses, or any other ware house temperature defined by product specifications, are intended to be covered by the term "reference temperature value" according to the principles of the present invention.

Moreover, in the above description, a deviation from the reference temperature value by ± 1...2 K is envisaged with domestic buildings. However, with other sites to be heated, such as large storage halls, a much larger difference may be allowable. For certain storage applications, even a pre-cooling and post-heating by e. g. 10 K below and above the reference temperature value, respectively, may be performed without causing damages to the stored goods.

Additionally, the principles of the present invention may also be applied to different parts of a building, taking into account different reference temperatures and allowable deviations therefrom, as may be the case for bed rooms versus bath rooms or living rooms.

Further, the control units performing the management schemes according to the various embodiments of the invention may be implemented by means of software modules or computer-readable instructions stored on one or more computer-readable media, which when executed by a processor or device component, perform the described various embodiments of the invention. Likewise, any combination of software modules, computer-readable media and hardware components is anticipated by the invention. The software modules may be stored on any kind of computer readable storage media, for example RAM, EPROM, EEPROM, flash memory, registers, hard disks, CD-ROM, DVD, etc.

## Claims

1. A Method of operating a combined heat and power plant (102), thermally coupled with a building that is connected to an electric grid (104), the method comprising the steps of:
providing local input data indicative of a local heat demand of the building;
providing grid input data indicative of a grid electricity demand;
determining at least one operating time period for the CHP based on a local input data and said grid input data, calculating an expected overall heat balance from said at least one operating time period, and
calculating a set point building temperature profile in a way that the set point temperature value is reduced below a reference temperature value during a predefined interval anteceding at least one of said at least one operating time period for defining a schedule of the at least one operation time period to match local heat demand and grid electricity demand, and wherein the reduced set point temperature value during the predefined interval implies to reduce the heat production for the building during the said predefined interval.

2. Method according to claim 1, comprising the steps of:
calculating a operation cost of the combined heat and power plant (102) required for operating the combined heat and power plant (102) based on primary
energy source price data,
estimating a feed-in price based on said grid input data,
operating the combined heat and power plant (102) during the operating time period when the estimated feed-in price exceeds the operation cost,
not operating the combined heat and power plant (102) during a period when the estimated feed-in price does not exceed the operation cost.

3. Method according to claim 2, comprising the steps of:
calculating an amount of heat generation of the combined heat and power plant (102) during the operating time period,
calculating an amount of overall heat demand of the building during the operating time period based on said local input data,
reducing the amount of heat production of the combined heat and power plant (102) during the predefined interval anteceding the operating time period if the calculated amount of heat production of the combined heat and power plant (102) during the operating time period exceeds the calculated amount of overall heat demand of the building during the operating time period.

4. Method according to one of the preceding claims wherein during said operating time period the set-point temperature value is elevated above said reference temperature value by a predefined value.

5. Method according to one of the preceding claims, wherein said local input data comprise at least one of measured temperature data of the internal temperature of the building, measured temperature data of an external temperature around the building, and weather forecast data indicating predicted temperature data of an external temperature around the building.

6. Method according to one of the preceding claims, wherein said grid input data comprise at least current price data for the electricity fed into the electric grid (104).

7. Method according to claim 6, wherein said current price data for the electricity fed into the electric grid (104) are based on a price level of an energy stock exchange.

8. Method according to claim 7, wherein said energy price data comprise retail price data regarding natural gas, wood pellets, or hydrogen.

9. System for optimizing the operation of a combined heat and power plant (102), thermally coupled with a building that is connected to a public electric grid (104), the system (111) comprising:
a combined heat and power plant controller (124) for controlling at least one generator to convert energy from a primary energy source into thermal energy and electrical energy,
a building heat demand forecast unit (109) for providing local input data indicative of a local heat demand of the building;
a price level calculator (112) for providing grid input data indicative of a grid electricity demand;
an optimization unit (122) for determining at least one operating time period for the combined heat and power plant (102) based on said local input data and said grid input data, the optimization unit (122) being operable to calculate an expected overall heat balance from said at least one operating time period, and for calculating a set-point building temperature profile in a way that the set-point temperature value is reduced below a reference temperature value during a predefined interval anteceding at least one of said operating time period for defining a schedule of the at least one operation time period to match local heat demand and grid electricity demand, and wherein the reduced set point temperature value during the predefined interval implies to reduce the heat production for the building during the said predefined interval.

10. System according to claim 9, wherein said system (111) further comprises a communication interface (107) for communicating with a server network (110).

11. System according to claim 9 or 10, wherein said system (111) further comprises a comfort level controller (120) for adjusting said reference temperature value according to a human comfort level or a desired product storage ambient temperature for one or more building units.

12. System according to one of the claims 9 to 11, wherein said optimization unit (122) is further operable to elevate the set-point temperature value above said reference temperature value by a predefined value, during said operating time period.

13. System according to one of the claims 9 to 13, further comprising a retail price calculator (113) for providing energy price data indicating a retail price of a primary energy source which is used to fuel said combined heat and power plant (102).

14. System according to one of the claims 9 to 13, wherein said optimization unit (122) is further operable to calculate said set-point building temperature profile for a plurality of buildings or a plurality of zones of one building.

## Patentansprüche

1. Verfahren zum Betreiben eines Blockheizkraftwerks (102), das thermisch mit einem Gebäude gekoppelt ist, das an ein elektrisches Stromnetz (104) angeschlossen ist, wobei das Verfahren die folgenden Schritte umfasst:
Bereitstellen lokaler Eingangsdaten, die einen lokalen Wärmebedarf des Gebäudes anzeigen;
Bereitstellen von Netzeingangsdaten, die einen Netzstrombedarf angeben;
Bestimmen wenigstens einer Betriebszeitdauer für das Blockheizkraftwerk auf der Grundlage von lokalen Eingangsdaten und der Netzeingangsdaten, Berechnen einer erwarteten Gesamtwärmebilanz aus der wenigstens einen Betriebszeitdauer und
Berechnen eines Sollwert-Gebäudetemperaturprofils in einer Weise, dass der Temperatursollwert unter einen Referenztemperaturwert abgesenkt wird, während eines vordefinierten Intervalls, das der wenigstens einen Betriebszeitdauer vorausgeht, um einen Zeitplan der wenigstens einen Betriebszeitperiode so zu definieren, dass er einem lokalen Wärmebedarf und Netzelektrizitätsbedarf entspricht;
wobei der reduzierte Temperatursollwert während des vordefinierten Intervalls impliziert, die Wärmeerzeugung für das Gebäude während des vordefinierten Intervalls zu reduzieren.

2. Verfahren nach Anspruch 1, umfassend folgende Schritte:
Berechnen der Betriebskosten des Blockheizkraftwerks (102), die zum Betrieb des Blockheizkraftwerks (102) erforderlich sind, auf der Grundlage von Preisdaten der Primärenergiequelle,
Schätzen eines Einspeisungspreises basierend auf den Netzeingangsdaten,
Betreiben des Blockheizkraftwerks (102) während der Betriebszeitperiode, wenn der geschätzte Einspeisungspreis die Betriebskosten übersteigt,
nicht Betreiben des Blockheizkraftwerks (102) während eines Zeitraums, in dem der geschätzte Einspeisungspreis die Betriebskosten nicht überschreitet.

3. Verfahren nach Anspruch 2, umfassend folgende Schritte:
Berechnen einer Wärmeerzeugungsmenge des Blockheizkraftwerks (102) während der Betriebszeitperiode,
Berechnen eines Gesamtwärmebedarfs des Gebäudes während der Betriebszeitperiode auf der Grundlage der lokalen Eingangsdaten,
Reduzieren der Wärmeerzeugungsmenge des Blockheizkraftwerks (102) während des vordefinierten Intervalls, das der Betriebszeitperiode vorausgeht, wenn die berechnete Wärmeerzeugungsmenge des Blockheizkraftwerks (102) während der Betriebszeitperiode den berechneten Gesamtwärmebedarf des Gebäudes während der Betriebszeitperiode übersteigt.

4. Verfahren nach einem der vorhergehenden Ansprüche, bei dem während der Betriebszeitperiode der Temperatursollwert um einen vorgegebenen Wert über den Referenztemperaturwert angehoben wird.

5. Verfahren nach einem der vorhergehenden Ansprüche, bei dem die lokalen Eingangsdaten gemessene Temperaturdaten der Innentemperatur des Gebäudes und/oder gemessene Temperaturdaten einer Außentemperatur um das Gebäude und/oder Wettervorhersagedaten umfassen, die vorhergesagte Temperaturdaten einer Außentemperatur um das Gebäude herum anzeigen.

6. Verfahren nach einem der vorhergehenden Ansprüche, bei dem die Netzeingangsdaten wenigstens aktuelle Preisdaten für die in das elektrische Netz (104) eingespeiste Elektrizität umfassen.

7. Verfahren nach Anspruch 6, bei dem die aktuellen Preisdaten für die in das elektrische Netz (104) eingespeiste Elektrizität auf einem Preisniveau einer Energiebörse basieren.

8. Verfahren nach Anspruch 7, bei dem die Energiepreisdaten Einzelhandelspreisdaten bezüglich Erdgas, Holzpellets oder Wasserstoff umfassen.

9. System zur Optimierung des Betriebs eines Blockheizkraftwerks (102), das thermisch mit einem Gebäude gekoppelt ist, das an ein öffentliches Stromnetz (104) angeschlossen ist, wobei das System (111) umfasst:
eine Blockheizkraftwerk-Steuereinheit (124) zum Steuern wenigstens eines Generators, um Energie von einer Primärenergiequelle in Wärmeenergie und elektrische Energie umzuwandeln,
eine Gebäudewärmebedarfs-Prognoseeinheit (109) zum Bereitstellen lokaler Eingangsdaten, die einen lokalen Wärmebedarf des Gebäudes angeben;
einen Preisniveau-Rechner (112) zum Bereitstellen von Netzeingangsdaten, die einen Netzstrombedarf angeben;
eine Optimierungseinheit (122) zum Bestimmen wenigstens einer Betriebszeitperiode für das Blockheizkraftwerk (102) auf der Grundlage der lokalen Eingangsdaten und der Netzeingangsdaten, wobei die Optimierungseinheit (122) zur Berechnung eines erwarteten Gesamtwärmeausgleichs von der wenigstens einen Betriebszeitperiode, und zum Berechnen eines Gebäudetemperaturprofilsollwertes auf eine Weise betreibbar ist, dass der Temperatursollwert während eines vordefinierten Intervalls, das wenigstens einer der Betriebszeitperiode vorausgeht, unter einen Referenztemperaturwert abgesenkt wird, um einen Zeitplan der wenigstens einen Betriebszeitspanne zu definieren, um den örtlichen Wärmebedarf und den Strombedarf des Netzes anzupassen, und der reduzierte Temperatursollwert während des vordefinierten Intervalls das Reduzieren der Wärmeerzeugung für das Gebäude während des vordefinierten Intervalls impliziert.

10. System nach Anspruch 9, wobei das System (111) weiterhin eine Kommunikationsschnittstelle (107) zum Kommunizieren mit einem Servernetzwerk (110) umfasst.

11. System nach Anspruch 9 oder 10, wobei das System (111) weiterhin eine Komfortniveauregelung (120) zum Einstellen des Referenztemperaturwerts gemäß einem menschlichen Komfortniveau oder einer gewünschten Produktlagerumgebungstemperatur für eine oder mehrere Gebäudeeinheiten umfasst.

12. System nach einem der Ansprüche 9 bis 11, bei dem die Optimierungseinheit (122) des Weiteren so betreibbar ist, dass sie den Temperatursollwert während der Betriebszeitperiode um einen vordefinierten Wert über den Referenztemperaturwert anhebt.

13. System nach einem der Ansprüche 9 bis 13, weiterhin umfassend einen Einzelhandelspreisrechner (113) zum Bereitstellen von Energiepreisdaten, die einen Einzelhandelspreis einer Primärenergiequelle angeben, die zum Betanken des Blockheizkraftwerks (102) verwendet wird.

14. System nach einem der Ansprüche 9 bis 13, bei dem die Optimierungseinheit (122) weiterhin dazu dient, den Gebäudetemperatursollwert für mehrere Gebäude oder mehrere Zonen eines Gebäudes zu berechnen.

## Revendications

1. Procédé d'exploitation d'une centrale de cogénération chaleur - électricité (102) couplée thermiquement avec un bâtiment qui est relié à un réseau électrique (104), le procédé comprenant les étapes suivantes :
la fourniture de données d'entrée locales indicatives d'une demande locale en chaleur du bâtiment,
la fourniture de données d'entrée de réseau indicatives d'une demande d'électricité au réseau,
la détermination d'au moins un intervalle de temps d'exploitation pour la centrale CHP sur la base des données d'entrée locales et desdites données d'entrée de réseau, en calculant un équilibre thermique global attendu à partir dudit ou desdits intervalles de temps d'exploitation, et
le calcul d'un profil de températures de consigne de bâtiment de manière à ce que la valeur de température de consigne soit réduite en dessous d'une valeur de température de référence pendant un intervalle de temps prédéfini qui précède au moins l'un dudit ou desdits intervalles de temps d'exploitation afin de définir le programme du ou des intervalles de temps permettant de faire correspondre la demande locale en chaleur et la demande d'électricité au réseau,
et dans lequel la valeur réduite de température de consigne pendant l'intervalle de temps prédéfini implique la réduction de la production de chaleur pour le bâtiment pendant ledit intervalle de temps prédéfini.

2. Procédé selon la revendication 1, comprenant les étapes suivantes :
le calcul d'un coup d'exploitation pour la centrale de cogénération chaleur - électricité (102), requis pour mettre en service la centrale de cogénération chaleur - électricité (102) sur la base de données de prix d'une source d'énergie primaire,
l'estimation d'un prix de rachat sur la base desdites données d'entrée de réseau,
l'exploitation de la centrale de cogénération chaleur - électricité (102) pendant l'intervalle de temps d'exploitation où le prix de rachat estimé dépasse le coup d'exploitation,
la non exploitation de la centrale de cogénération chaleur - électricité (102) pendant l'intervalle de temps où le prix de rachat estimé ne dépasse pas le coup d'exploitation.

3. Procédé selon la revendication 2, comprenant les étapes suivantes :
le calcul de la quantité de chaleur générée de la centrale de cogénération chaleur - électricité (102) pendant l'intervalle de temps d'exploitation,
le calcul de la quantité de la demande globale en chaleur du bâtiment pendant l'intervalle de temps d'exploitation sur la base desdites données d'entrée locales,
la réduction de la quantité de chaleur produite de la centrale de cogénération chaleur - électricité (102) pendant l'intervalle de temps prédéfini qui précède l'intervalle de temps d'exploitation si la quantité de chaleur produite calculée de la centrale de cogénération chaleur - électricité (102) pendant l'intervalle de temps d'exploitation dépasse la quantité calculée de demande de chaleur globale du bâtiment pendant l'intervalle de temps d'exploitation.

4. Procédé selon l'une des revendications précédentes, dans lequel la valeur de température de consigne, pendant ledit intervalle de temps d'exploitation, est élevée d'une valeur prédéfinie au-dessus de ladite valeur de température de référence.

5. Procédé selon l'une des revendications précédentes, dans lequel lesdites données d'entrée locales comprennent au moins un type parmi les données de température mesurée de la température interne du bâtiment, les données de température mesurée de la température extérieure autour du bâtiment et les données de prévisions météorologiques indiquant les données de température prédite de la température extérieure autour du bâtiment.

6. Procédé selon l'une des revendications précédentes, dans lequel lesdites données d'entrée de réseau comprennent au moins les données de prix courant pour l'électricité injectée dans le réseau électrique (104).

7. Procédé selon la revendication 6, dans lequel lesdites données de prix courant pour l'électricité injectée dans le réseau électrique (104) sont fondées sur le niveau de prix d'une bourse des valeurs de l'énergie.

8. Procédé selon la revendication 7, dans lequel lesdites données de prix de l'énergie comprennent des données de prix public se rapportant à du gaz naturel, à des granulés de bois ou à de l'hydrogène.

9. Système permettant d'optimiser le fonctionnement d'une centrale de cogénération chaleur - électricité (102) couplée thermiquement avec un bâtiment qui est relié à un réseau public d'électricité (104), le système (111) comprenant :
un contrôleur de centrale de cogénération chaleur - électricité (124) destiné à commander au moins un générateur convertissant de l'énergie depuis une source d'énergie primaire en énergie thermique et en énergie électrique,
une unité de prévision de demande de chaleur de bâtiment (109) destinée à fournir des données d'entrée locales indicatives d'une demande thermique locale du bâtiment,
un calculateur de niveau de prix (112) destiné à fournir des données d'entrée de réseau indicatives d'une demande d'électricité au réseau,
une unité d'optimisation (122) destinée à déterminer moins un intervalle de temps d'exploitation pour la centrale de cogénération chaleur - électricité (102) sur la base desdites données d'entrée locales et desdites données d'entrée de réseau, l'unité d'optimisation (122) pouvant être mise en oeuvre pour calculer un équilibre thermique global attendu depuis ledit ou lesdits intervalles de temps d'exploitation, ainsi que pour calculer un profil de températures de consigne de bâtiment de manière à ce que la valeur de température de consigne soit réduite en dessous d'une valeur de température de référence pendant un intervalle de temps prédéfini qui précède au moins l'un dudit ou desdits intervalles de temps d'exploitation afin de définir le programme du ou des intervalles de temps permettant de faire correspondre la demande locale en chaleur et la demande d'électricité au réseau,
et dans lequel la valeur réduite de température de consigne pendant l'intervalle de temps prédéfini implique la réduction de la production de chaleur pour le bâtiment pendant ledit intervalle de temps prédéfini.

10. Système selon la revendication 9, ledit système (111) comprenant en outre une interface de communication (107) permettant de communiquer avec un réseau de serveurs (110) .

11. Système selon la revendication 9 ou la revendication 10, ledit système (111) comprenant en outre un contrôleur de niveau de confort (120) destiné à ajuster ladite valeur de température de référence en fonction d'un niveau de confort pour l'homme ou d'une température ambiante souhaitée de stockage de produits pour une ou plusieurs unités de bâtiments.

12. Système selon l'une des revendications 9 à 11, dans lequel ladite unité d'optimisation (122) peut en outre être utilisée pour élever d'une valeur prédéfinie la valeur de température de consigne au-dessus de ladite valeur de température de référence pendant ledit intervalle de temps d'exploitation.

13. Système selon l'une des revendications 9 à 13, comprenant en outre un calculateur de prix public (113) destiné à fournir des données du prix de l'énergie indiquant le prix public d'une source d'énergie primaire qui est utilisée pour alimenter ladite centrale de cogénération chaleur - électricité (102).

14. Système selon l'une des revendications 9 à 13, dans lequel ladite unité d'optimisation (122) peut en outre être utilisée pour calculer ledit profil de températures de consigne de bâtiment pour une pluralité de bâtiments ou pour une pluralité de zones d'un même bâtiment.
